Europäisches Patentamt

European Patent Office

Office européen des brevets

(11) Publication number: **0 421 591 A2**

## EUROPEAN PATENT APPLICATION

(21) Application number: 90308969.6

(22) Date of filing: 15.08.90

(51) Int. Cl.5: **G11B 5/60**, G11B 33/14,
//G11B5/40

(30) Priority: 03.10.89 US 416758

(43) Date of publication of application:
10.04.91 Bulletin 91/15

(84) Designated Contracting States:
**DE FR GB**

(71) Applicant: **International Business Machines
Corporation
Old Orchard Road
Armonk, N.Y. 10504(US)**

(72) Inventor: **Bleich, Herman Ewald
2780 Thomas Grade Road
Morgan Hill, California 95037(US)**
Inventor: **Franco, Luis Padilla
8712 Lions Creek Drive
Gilroy, California 95020(US)**
Inventor: **Sanders, Ian Lewis
16725 Wild Oak Way
Morgan Hill, California 95037(US)**

(74) Representative: **Harris, Ian Richard
IBM United Kingdom Limited Intellectual
Property Department Hursley Park
Winchester, Hants. SO21 2JN(GB)**

(54) Method for depositing a protective film on a disk file slider.

(57) A disk file with a conventional slider and a disk with an essentially carbon protective overcoat is cycled on and off at a frequency such that the slider is maintained in contact with the disk. Alternatively, the disk is rotated at a low constant speed so that the slider is maintained in contact with the disk. In both cases, carbon is transferred from the carbon overcoated disk to the air bearing surface of the slider, depositing a thin protective carbon film on the air bearing surface of the slider. During subsequent operation of the disk file, the disk file has excellent durability, especially when operated at relatively low humidity, as is required in those disk files which use a magnetoresistive sensor on the slider.

# METHOD FOR DEPOSITING A PROTECTIVE FILM ON A DISK FILE SLIDER

## Field of the Invention

This invention relates to disk files that have disks with protective carbon overcoats and read/write heads supported on air bearing sliders. In particular, the invention relates to a method for forming a relatively thin protective carbon film on the air bearing surface of a slider to improve the durability of the head-disk interface in the disk file.

## Background of the Invention

In conventional disk files, the read/write transducers (or heads) are supported on sliders which ride on cushions or bearings of air above the disk surface when the disks are rotating at operating speed. The slider is connected to a linear or rotary voice coil actuator by means of a relatively fragile suspension. In large capacity disk files there is generally a stack of rigid disks and a number of actuators, with each actuator supporting a number of sliders. The actuators generally move the sliders radially across the disks so that each head may access the full recording area of a respective disk. In these conventional disk files, when the disk is not rotating the slider is biased against the disk surface by a small force from the suspension. The slider is thus in contact with the disk surface from the time the disk file is turned on until the disk reaches a speed sufficient to cause the slider to ride on the air bearing. The slider comes into contact again with the disk surface when the disk file is turned off and the rotational speed of the disk falls below that necessary to create the air bearing.

One type of magnetic recording disk used in disk files is a thin film metal alloy or metal oxide disk which has a protective overcoat of essentially carbon. The carbon overcoat protects the magnetic layer of the disk from corrosion as well as wear caused by contact with the air bearing surface of the slider supporting the read/write head. A liquid lubricant such as a perfluoroether, is typically applied to the carbon overcoat.

Recent advances in read/write head technology have resulted in the possible use of magnetoresistive (MR) read heads in disk files. Unlike conventional inductive heads, MR heads, due to the material from which they are fabricated, are highly susceptible to corrosion. Accordingly, in order to ensure proper operation of such heads in disk files, including those which use carbon overcoated disks, it is necessary to operate the disk file at very low humidity. However, it has been discovered that when disk files with carbon overcoated disks are operated at low humidity in conjunction with $TiC/Al_2O_3$ sliders, the disks wear at an extremely high rate. Thus there is the problem that with MR heads high humidity leads to corrosion of the head, whilst low humidity produces excessive wear of the disks.

## Disclosure of the Invention

Accordingly, the invention provides for a method for depositing a film composed essentially of carbon on the air bearing surface of a slider in a disk file, the disk file being of the type wherein the disk associated with said slider has an essentially carbon protective overcoat; said method comprising the step of rotating the disk at a speed such that the air bearing surface of the slider remains substantially in contact with the carbon overcoat of the disk for sufficient time to transfer carbon from the disk overcoat to the slider air bearing surface.

Preferably the step of rotating the disk comprises repetitively starting and stopping the disk. It is further preferred that this step comprises performing approximately between 400 to 1000 stop/start cycles, with the time between cycles being minimised so as to prevent temperature fluctuations of the slider air bearing surface. The frequency of these stop/start cycles must be sufficient for the slider to remain in contact with the carbon overcoated disk. Other implementations are also possible, for example rotating the disk at an approximately constant speed. It is preferred that the slider is maintained over a predetermined band of the disk during the step of rotating the disk.

Preferably the disk and slider are maintained in an environment of relative humidity greater than approximately 30% during the step of rotating the disk, although it is also possible to obtain improved disk durability if lower relative humidities, such as only 10%, are used. It is also preferred that the thickness of the carbon film deposited on the slider is less than approximately 50 Angstroms. This thickness of carbon is sufficient to increase disk durability without leading to a spacing loss between the read/write head and the data on the disk.

In other words the present invention provides a method for transferring carbon from the carbon overcoated disk to the air bearing surface of a slider. In the preferred method, the assembled disk file is maintained in an environment having a relative humidity (RH) of greater than approximately 30%. The disk file is then cycled on and off at a frequency sufficient to maintain the slider in contact with the carbon overcoated disk. As a result of these start/stop (s/s) cycles, carbon is transferred from the carbon overcoated disk to the air bearing surface of the slider to a thickness less than approximately 50 Å (5nm). After the carbon film has been deposited on the air bearing surface of the slider in this manner, the disk file can then be maintained at relatively low humidity and operated without any loss in durability of the disk. This permits MR heads to be used in disk files without any loss in disk durability.

Brief Description of the Drawings

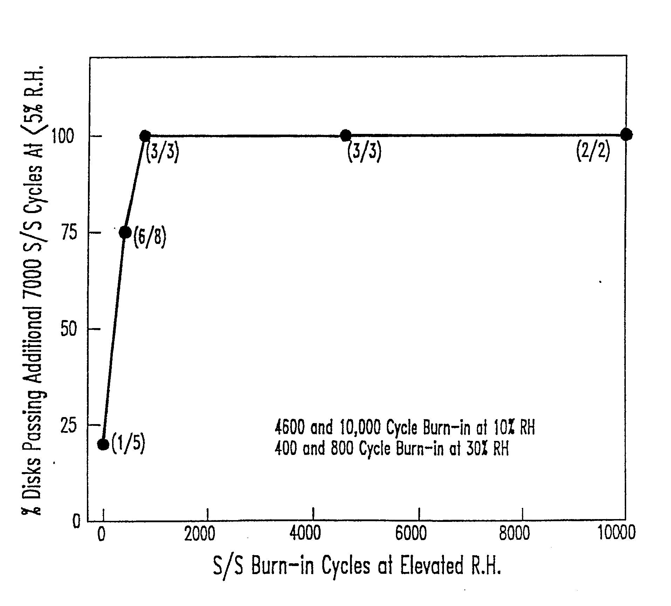

Fig. 1 is a plot illustrating disk durability as a function of the number of "burn in" start/stop cycles.

Detailed Description

The durability of disks in magnetic recording disk files is determined by measuring the number of start/stop cycles before failure of the head-disk interface. It has been found that when carbon overcoated thin film disks are used with conventional sliders (e.g., a composite TiC/Al$_2$O$_3$ ceramic), the disk durability is directly related to the relative humidity (RH) to which the head-disk interface is exposed. As the relative humidity decreases below approximately 30%, the disk durability decreases generally linearly. During the determination of the relationship between disk durability and humidity, it was discovered that frequent start/stop cycling (s/s) of sliders on carbon overcoated disks resulted in a deposition of a carbon film on the air bearing surfaces of the sliders. Subsequent testing of these disk files showed a significantly improved disk durability when operated at low humidity (i.e., less than approximately 30% RH). Thus the disk durability of disk files can be improved by transferring carbon from the carbon overcoated disk to the air bearing surface of the slider by rotating the disk at a velocity sufficient to maintain the slider in contact with the disk surface.

To achieve this, an assembled disk file can be connected to a commercially available disk exerciser and the disk file cycled on and off at a frequency such that the sliders are maintained in contact with the carbon overcoated disks. The improved durability of such disk files is shown in Fig. 1, which illustrates the relationship between the percentage of disks which pass an additional 7000 s/s cycles as a function of the number of s/s "burn in" cycles. In these disk files liquid perfluoroether lubricant was applied to the carbon overcoated disks. Referring to Fig. 1, when five disk files were not subjected to s/s burn in cycles, four of the five disk files failed to survive an additional 7000 s/s cycles at less than 5% RH (of the two numbers beside each data point in Fig 1 the first number indicates the number of disk files passing and the second number of disk files tested). On the other hand, when eight disk files were subjected to 400 s/s cycles at approximately 30% RH, only two of these eight failed to survive an additional 7000 s/s cycles at less than 5% RH. The transfer of the carbon overcoat to the air bearing surface of the slider can be accomplished at various s/s cycles and various relative humidities. For example, when the disk files were subjected to 4600 s/s cycles at only 10% RH, all three of these disk files survived an additional 7000 s/s cycles at very low humidity, i.e. less than 5% RH.

As an alternative to forming the carbon overcoat on the slider air bearing surface by cycling the disk file through a series of s/s cycles such that the slider is maintained in contact with the carbon overcoated disk, it is also possible to deposit the carbon film onto the slider by running the disk file at a relatively constant slow speed such that the slider is maintained in essentially continual contact with the carbon overcoated disk. Preferably this burn in is performed in a non-data band or region of the disk, such as a slider "landing zone" located either at the inside or outside diameter of the disk. In this manner, the data regions of the disk are not exposed to any excessive wear that may be caused by the burn in.

while it is possible to transfer carbon to the air bearing surface of the slider to a thickness greater than 50 Å (5nm), a carbon film of excessive thickness on the slider results in a spacing loss between the read/write head on the slider and the data on the disk. A 50 Å carbon film on the slider is sufficient to prevent damage to the disk and provides protection to the MR head if the disk file is maintained at relatively low humidity (i.e. less than approximately 30% RH). It has been found experimentally that a TiC/Al$_2$O$_3$ slider subjected to 1,000 s/s cycles on a thin film disk with a 300 Å overcoat of atomic composition 80-90 % carbon and 10-20 % hydrogen forms an essentially uniform film of approximately 50 Å of carbon on the air bearing surface of the slider.

while the preferred embodiments of the present invention have been illustrated in detail, it should be apparent that modifications and adaptations to those embodiments may occur to one skilled in the art without departing from the scope of the present invention as set forth in the following claims.

Claims

1. A method for depositing a film composed essentially of carbon on the air bearing surface of a slider in a disk file, the disk file being of the type wherein the disk associated with said slider has an essentially carbon protective overcoat, the method comprising the step of rotating the disk at a speed such that the air bearing surface of the slider remains substantially in contact with the carbon overcoat of the disk for sufficient time to transfer carbon from the disk overcoat to the slider air bearing surface. ·

2. A method according to claim 1 wherein the step of rotating the disk comprises repetitively starting and stopping rotation of the disk.

3. A method according to claim 2 wherein repetitively starting and stopping rotation of the disk comprises performing approximately between 400 to 1000 start/stop cycles with the time between cycles being minimised so as to prevent temperature fluctuations of the slider air bearing surface.

4. A method according to claim 1, wherein the step of rotating the disk comprises rotating the disk at an approximately constant speed.

5. A method according to any preceding claim, wherein the slider is maintained over a predetermined band of the disk during the step of rotating the disk.

6. A method according to any preceding claim, wherein the slider and disk are maintained in an environment of relative humidity greater than approximately 30 percent during the step of rotating the disk.

7. A method according to any preceding claim, wherein the thickness of the carbon film deposited on the slider is less than approximately 50 Angstroms.

8. A method according to any preceding claim, wherein said slider supports a magnetoresistive sensor.